# EUROPEAN PATENT APPLICATION

(11) **EP 4 656 285 A1**
(43) Date of publication of application: **03.12.2025**
(21) Application number: 24924496.3
(22) Date of filing: 13.11.2024
(51) Int. Cl.: B01J 19/18, B01J 19/00, B01J 4/00, B01J 19/14

(54) **HIGH-EFFICIENCY REACTION KETTLE**

(30) Priority: 18.02.2024 CN 202410182135
(71) Applicant: HUAYOU NEW ENERGY TECHNOLOGY (QUZHOU) CO., LTD., Quzhou, Zhejiang 324000 (CN); ZHEJIANG HUAYOU COBALT CO., LTD., Jiaxing, Zhejiang 314000 (CN)
(72) Inventor: WU, Jianfei, Quzhou, Zhejiang 324000 (CN); QIU, Tian, Quzhou, Zhejiang 324000 (CN); XIANG, Bo, Quzhou, Zhejiang 324000 (CN); QIAO, Dongbin, Quzhou, Zhejiang 324000 (CN); LUO, Kai, Quzhou, Zhejiang 324000 (CN)
(74) Representative: Bryn Aarflot AS
(86) International application number: PCT/CN2024/131833
(87) International publication number: WO 2025/171734

(57) **Abstract**

The present invention provides a high-efficiency reaction kettle, relating to the technical field of ternary precursor production. The high-efficiency reaction kettle comprises: a kettle body, configured to accommodate slurry; a guide cylinder fixed at a top of the kettle body and extending downward, wherein a first flow guide port is formed at a bottom of the guide cylinder, and a second flow guide port is formed at an upper side wall of the guide cylinder; multiple feeding pipes, wherein at least part of openings of the feeding pipes are arranged inside the guide cylinder; a stirring device penetrating through the guide cylinder and extending out from the first flow guide port of the guide cylinder, to drive the slurry to move downward inside the guide cylinder, and to drive the slurry to move toward a periphery of the kettle body at the bottom of the kettle body; a baffle arranged on an inner side wall of the kettle body and extending along a height direction of the kettle body; and a solid-liquid separation device arranged at a top of the kettle body and located outside the guide cylinder, to extract a clear liquid from the slurry inside the kettle body. The reaction kettle can improve production efficiency and simultaneously improve product quality.

## Description

### CROSS-REFERENCE TO RELATED APPLICATIONS

The present invention claims the priority to the Chinese patent application No. 202410182135.8, filed with the Chinese Patent Office on February 18, 2024, and entitled "HIGH-EFFICIENCY REACTION KETTLE", the contents of which are incorporated herein by reference in entirety.

### TECHNICAL FIELD

The present invention relates to the technical field of ternary precursor production, and particularly relates to a high-efficiency reaction kettle.

### BACKGROUND ART

In the ternary precursor production process, the synthesis process is the core process of the entire product production. In the prior art, when synthesizing the ternary precursor, various raw materials are generally added into the reaction kettle, and then stirring is performed to timely disperse the raw materials into the slurry in the reaction kettle, so that the raw materials are fully reacted.

During the reaction, it is required to stir the slurry through the stirring device in the reaction kettle, so as to form a flow field in the reaction kettle. In an ideal state, the flow field rapidly moves downward in the middle of the reaction kettle to mix the raw materials; then moves toward the edge of the reaction kettle at the bottom of the reaction kettle; after reaching the edge, slowly moves upward, so that the raw materials can be fully reacted; and finally moves back to the middle of the reaction kettle at the upper region of the reaction kettle to recirculate.

However, the above reaction process is relatively slow, and the productivity is low.

### SUMMARY

In view of this, the present invention provides a high-efficiency reaction kettle. The reaction kettle can improve production efficiency and simultaneously improve product quality.

The present invention provides a high-efficiency reaction kettle, including:
a kettle body, configured to accommodate slurry;
a guide cylinder, fixed at a top of the kettle body and extending downward, wherein a first flow guide port is formed at a bottom of the guide cylinder, and a second flow guide port is formed at an upper side wall of the guide cylinder;
multiple feeding pipes, wherein at least part of openings of the feeding pipes are arranged inside the guide cylinder;
a stirring device, penetrating through the guide cylinder and extending out from the first flow guide port of the guide cylinder, to drive the slurry to move downward inside the guide cylinder, and to drive the slurry to move toward a periphery of the kettle body at the bottom of the kettle body;
a baffle arranged on an inner side wall of the kettle body and extending along a height direction of the kettle body; and
a solid-liquid separation device arranged at a top of the kettle body and located outside the guide cylinder, to extract a clear liquid from the slurry inside the kettle body.

Further, a blocking portion is formed on the guide cylinder at a position where the second flow guide port is not provided. At the same height of the kettle body, the baffle corresponds to the second flow guide port in position, and the solid-liquid separation device corresponds to the blocking portion in position.

Further, multiple second flow guide ports and multiple blocking portions can be provided, and the second flow guide ports and the blocking portions are arranged at intervals. Multiple baffles are provided, and the multiple baffles are sequentially arranged on an inner side wall of the kettle body along a circumferential direction of the kettle body. Each baffle corresponds to one second flow guide port in position. The solid-liquid separation device is arranged between two baffles.

Further, the solid-liquid separation device is provided with multiple filter elements. On the solid-liquid separation device, a distance between the filter element farthest from an axis of the kettle body and an axis of the kettle body is greater than a distance between a side edge of the baffle away from the side wall of the kettle body and the axis of the kettle body.

Further, a height of the upper end of the baffle in the kettle body is higher than a height of a lower edge of the second flow guide port in the kettle body, and is higher than a height of the lower end of the filter element in the kettle body.

Further, the stirring device includes a rotating shaft, a first impeller, and a second impeller. The rotating shaft penetrates through the guide cylinder, and the first impeller and the second impeller are sequentially arranged on the rotating shaft from top to bottom. In the height direction of the kettle body, the first impeller is located inside the guide cylinder and is lower than a lower edge of the second flow guide port, and a height of the second impeller in the kettle body is lower than a height of the first flow guide port.

Further, the feeding pipe includes a first feeding pipe and a second feeding pipe. A pipe opening of the first feeding pipe corresponds to the first impeller in position and is lower than the height of the first impeller in the synthesis kettle. A pipe opening of the second feeding pipe corresponds to the second impeller in position and is higher than the height of the second impeller in the synthesis kettle.

Further, the first impeller is a four-pitched-blade impeller, and the second impeller is a six-bladed disk turbine impeller.

Further, a height of a highest point of the filter element is higher than the highest height of the baffle.

Further, the solid-liquid separation device includes a filter element, a fixing frame, and a connecting pipe. The solid-liquid separation device is fixed to the kettle body through the fixing frame. One end of the connecting pipe is connected to the filter element, and the other end of the connecting pipe extends out of the kettle body.

In summary, in the present invention, through the arrangement of the guide cylinder, the stirring device, the baffle, and the solid-liquid separation device, it is possible to improve production efficiency and simultaneously improve product quality. Further, through the limitation of the positions of each structure, the flow field can be better optimized, thereby improving reaction speed and product quality.

The above description is merely a summary of the technical solution of the present invention, provided to enable a clearer understanding of the technical means of the present invention and to allow implementation in accordance with the contents of the specification. In order to make the above and other objectives, features, and advantages of the present invention more apparent and easily understood, preferred embodiments are specifically provided below and described in detail with reference to the drawings.

### BRIEF DESCRIPTION OF DRAWINGS

FIG. 1 shows a schematic structural diagram of a high-efficiency reaction kettle provided in the embodiment of the present invention;
FIG. 2 shows a schematic diagram of a positional relationship among a guide cylinder, a solid-liquid separation device, and a baffle viewed along an axial direction of a kettle body;
FIG. 3 shows a schematic sectional structure diagram of a guide cylinder;
FIG. 4 shows a schematic view of an axial structure of a fixing frame of the solid-liquid separation device;
FIG. 5 shows a schematic bottom view of the fixing frame in FIG. 4; and
FIG. 6 shows a schematic structural view of a filter element of a solid-liquid separation device.

### DETAILED DESCRIPTION OF EMBODIMENTS

In order to further explain the technical means and effects adopted by the present invention to achieve the predetermined invention objectives, the following description is provided in detail in conjunction with the drawings and preferred embodiments.

The present invention provides a high-efficiency reaction kettle, and the reaction kettle can improve production efficiency and simultaneously improve product quality.

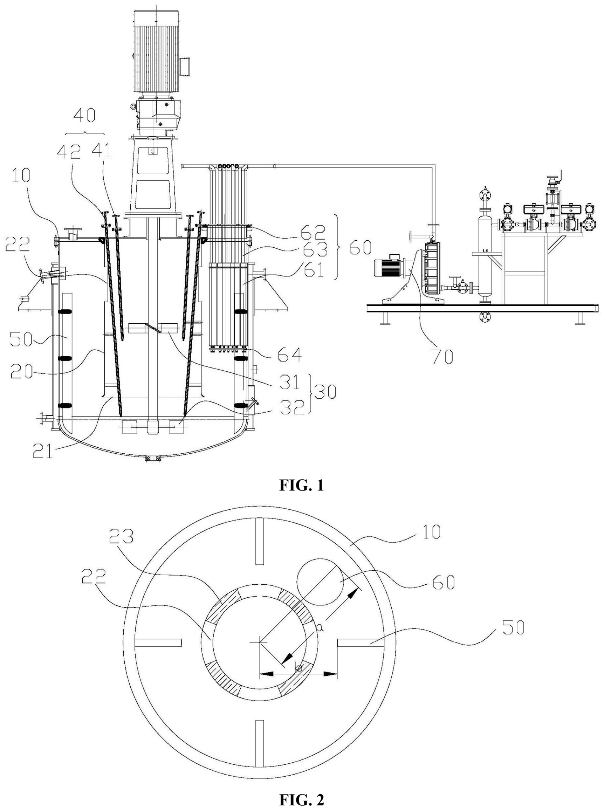

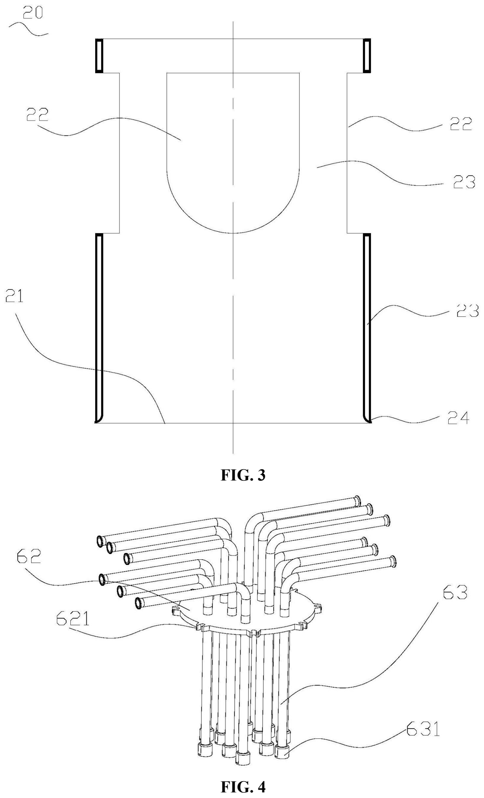

FIG. 1 shows a schematic structural diagram of the high-efficiency reaction kettle provided in the embodiment of the present invention, FIG. 2 shows a schematic diagram of the positional relationship among the guide cylinder, solid-liquid separation device, and baffle viewed along the axial direction of the kettle body, and FIG. 3 shows a schematic sectional structure diagram of the guide cylinder. As shown in FIGS. 1 to 3, the high-efficiency reaction kettle provided by the present invention includes a kettle body 10, a guide cylinder 20, a stirring device 30, a feeding pipe 40, a baffle 50, and a solid-liquid separation device 60. The kettle body 10 is configured to accommodate slurry, the guide cylinder 20 is fixed at the top of the kettle body 10 and extends downward, and openings are formed at the bottom and the upper side wall of the guide cylinder 20, so as to form a first flow guide port 21 at the bottom of the guide cylinder 20 and to form a second flow guide port 22 at the upper side wall of the guide cylinder 20. Multiple feeding pipes 40 are provided, and at least part of the openings of the feeding pipes 40 are arranged inside the guide cylinder 20. The stirring device 30 penetrates through the guide cylinder 20 and extends out from the first flow guide port 21 of the guide cylinder 20. That is, the height of the end of the stirring device 30 away from the top of the kettle body 10 is lower than the height of the first flow guide port 21, so as to drive the slurry to move downward inside the guide cylinder 20, and to drive the slurry to move toward the periphery of the kettle body 10 at the bottom of the kettle body 10. The baffle 50 is arranged on the inner side wall of the kettle body 10 and extends along the height direction of the kettle body 10. The solid-liquid separation device 60 is arranged at the top of the kettle body 10 and located outside the guide cylinder 20, so as to extract the clear liquid from the slurry inside the kettle body 10.

In this embodiment, during the production of the ternary precursor, the raw materials can first be fed into the slurry in the region covered by the guide cylinder 20 of the kettle body 10 through the feeding pipe 40, and then under the driving of the stirring device 30, the slurry mixed with raw materials is driven downward inside the guide cylinder 20, and at the bottom of the kettle body 10, the slurry mixed with raw materials is driven toward the periphery of the kettle body 10. Due to the presence of the guide cylinder 20, it can provide guidance for the downward movement of the slurry in the region covered by the guide cylinder 20, preventing the slurry from moving toward the periphery; when the slurry flows out from the first flow guide port 21, the stirring device 30 can drive the slurry to move toward the periphery of the kettle body 10; after the slurry reaches the side wall region of the kettle body 10, due to the presence of the baffle, it can again provide guidance for the movement of the slurry, so that the slurry moves toward the upper portion of the kettle body 10; and at the upper portion of the kettle body 10, the slurry re-enters the interior of the guide cylinder 20 from the second flow guide port 22, so as to form a circulating flow field. In the entire circulation, the raw materials can be uniformly mixed with the existing slurry and react more quickly. Since in the kettle body 10, the circulating flow field is guided by the guide cylinder 20, the stirring device 30, and the baffle, the circulation path of the entire flow field is relatively clear, with less turbulence, which facilitates the reaction. Further, due to the presence of the solid-liquid separation device 60, it can filter the slurry inside the kettle body 10 and absorb the clear liquid, without the need to transfer the slurry to a separate concentration kettle, which can improve production efficiency and ensure consistency of the reaction environment. Therefore, the reaction kettle can improve production efficiency and simultaneously improve product quality.

Further, a blocking portion 23 is formed at the upper portion of the guide cylinder 20 at a position where the second flow guide port 22 is not provided. At the same height of the kettle body 10, the above-mentioned baffle 50 corresponds to the second flow guide port 22 in position, and the solid-liquid separation device 60 corresponds to the blocking portion 23 in position. That is, on the same section perpendicular to the axis of the kettle body 10, a connecting line between at least one baffle 50 and an axis of the kettle body 10 passes through the second flow guide port 22. At least a part of a connecting line between the solid-liquid separation device 60 and an axis of the kettle body 10 passes through the blocking portion 23.

Through the above arrangement, the baffle 50 can better guide the flow field of the slurry re-entering the interior of the guide cylinder 20 from the second flow guide port 22, and the solid-liquid separation device 60 is arranged in a region where the flow field is weak, which eliminates or reduces the influence of the solid-liquid separation device 60 on the flow field inside the kettle body 10 when the solid-liquid separation device 60 is arranged inside the kettle body 10.

Further, in the present embodiment, multiple second flow guide ports 22 and blocking portions 23 can be provided, and the second flow guide port 22 and the blocking portion 23 are arranged at intervals. That is, a blocking portion 23 is formed between two second flow guide ports 22, and a second flow guide port 22 is formed between two blocking portions 23.

Correspondingly, multiple baffles 50 are provided, and the multiple baffles 50 are sequentially arranged on an inner side wall of the kettle body 10 along a circumferential direction of the kettle body 10. Each baffle 50 corresponds to one second flow guide port 22 in position. The solid-liquid separation device 60 is arranged between two baffles 50.

Referring to FIG. 2, in the present embodiment, the solid-liquid separation device 60 is provided with multiple filter elements 61. On the solid-liquid separation device 60, a distance between the filter element 61 farthest from the axis of the kettle body 10 and the axis of the kettle body 10 (as shown by a in FIG. 2, where the circle in FIG. 2 only represents the distribution range of the filter elements 61) is greater than a distance between a side edge of the baffle 50 away from the side wall of the kettle body 10 and the axis of the kettle body 10 (as shown by b in FIG. 2). That is, at least a portion of the solid-liquid separation device 60 is arranged in a flow field optimized by the baffle 50, so as to minimize the influence on the flow field inside the kettle body 10.

More specifically, as shown in FIG. 2, viewed along the axial direction of the kettle body 10, a distance between the side edge of the baffle 50 away from the side wall of the kettle body 10 and the axis of the kettle body 10 is D/5 to 3D/50, where D is a diameter of the kettle body 10. A distance between a center of the filter element 61 farthest from the axis of the kettle body 10 and the axis of the kettle body 10 on the solid-liquid separation device 60 is greater than D/4, where D is a diameter of the kettle body 10.

Referring to FIG. 1, in the present embodiment, the height of the upper end of the baffle 50 in the kettle body 10 is higher than the height of the lower edge of the second flow guide port 22 in the kettle body 10. The height of the lower end of the filter element 61 in the kettle body 10 is lower than the height of the upper end of the baffle 50 in the kettle body 10 and the height of the lower edge of the second flow guide port 22 in the kettle body 10. Through the arrangement of the guide cylinder 20, a region with relatively high flow velocity of the slurry is located at the first flow guide port 21 and the second flow guide port 22. Through the above arrangement, the lowest point of the filter element 61 can be approximately located at a middle portion of the baffle 50, which allows the filter element 61 to be located in a relatively weak flow field and further reduces the influence of the solid-liquid separation device 60 on the flow field.

Further, in the present embodiment, a total area of all the second flow guide ports 22 is 1 to 1.5 times a sectional area of the guide cylinder 20 in a direction perpendicular to the axis. Through the above arrangement, the flow field can rapidly and efficiently enter the guide cylinder 20, accelerate the movement speed of the materials, shorten the synthesis time, and effectively ensure the particle size distribution of the product.

Further, for a single second flow guide port 22, a height of the second flow guide port 22 is 0.7 to 1.1 times a width of the second flow guide port 22 along a circumferential direction of the kettle body 10.

Referring to FIGS. 1 and 3, in the present embodiment, a first insulation jacket (not shown) is provided on an inner side wall of the kettle body 10, a second insulation jacket 24 is provided on a side wall of the guide cylinder 20, and a communication port for inlet and outlet of insulation liquid (not shown) is provided at a connection between the guide cylinder 20 and a top portion of the kettle body 10.

An outward flange 25 is formed at a bottom edge of the guide cylinder 20, so as to guide the flow of the slurry and reduce disturbance to the flow field.

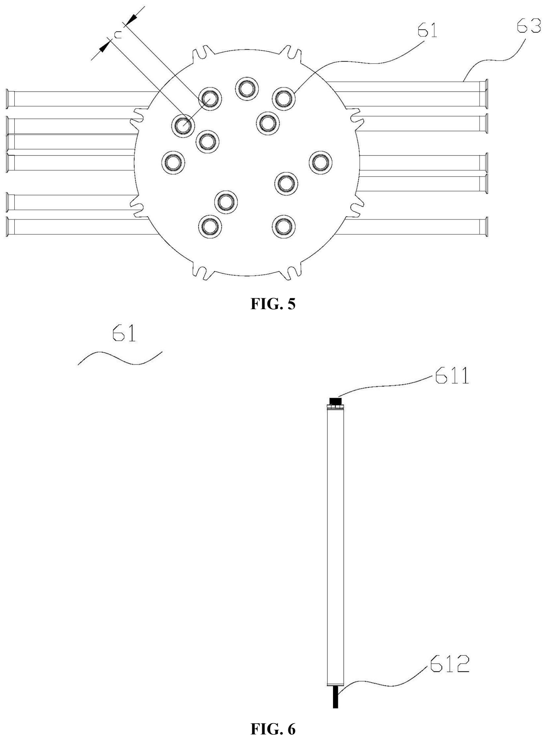

FIG. 4 shows a schematic view of an axial structure of a fixing frame of the solid-liquid separation device; FIG. 5 shows a schematic bottom view of the fixing frame in FIG. 4; and FIG. 6 shows a schematic structural view of a filter element of a solid-liquid separation device. As shown in FIG. 1 and FIGS. 4 to 6, the solid-liquid separation device 60 further includes a fixing frame 62 and a connecting pipe 63. The solid-liquid separation device 60 is fixed to the kettle body 10 through the fixing frame 62. One end of the connecting pipe 63 is connected to the filter element 61, and the other end of the connecting pipe 63 extends out of the kettle body 10 and is configured to be connected to a pump body 70. Through the arrangement of the connecting pipe 63, it is possible to facilitate the adjustment of the height of the filter element 61 extending into the kettle body 10. During solid-liquid separation, the liquid level can completely immerse the filter element 61 to prevent air suction.

Further, a height of one end of the filter element 61 facing the connecting pipe 63 in the kettle body 10, i.e., the height of the highest point of the filter element 61, is higher than the highest height of the baffle 50. In other words, the highest position of the baffle 50 is located in a middle portion of the filter element 61. The arrangement of the above position can reduce the influence of the baffle 50 on the flow field of the slurry inside the upper portion of the kettle body 10. At the same time, it can also meet the height requirement of mounting the filter element 61 inside the kettle body 10.

The connecting pipe 63 extends in a vertical direction, and a threaded port 631 for connection is formed at an end of the connecting pipe 63 away from the fixing frame 62. A first connecting portion 611 is formed at the end of the filter element 61 facing the connecting pipe 63. The filter element 61 is in threaded engagement with the connecting pipe 63 through the first connecting portion and is fixed to the connecting pipe 63 in the vertical direction.

The filter element 61 can be an alloy sintered felt or a non-metal sintered felt.

In the present embodiment, a diameter of each filter element 61 is 10-160 mm, preferably 10-50 mm. A gap between two filter elements 61 (that is, c in FIG. 5) is 1/6d to d, where d is a diameter of the filter element 61.

By limiting the length and diameter of the filter element 61, it is possible to efficiently extract the liquid from the slurry during solid-liquid separation, and to prevent solids from clogging between two filter elements 61, thereby reducing the filtration performance of the filter element 61.

A second connecting portion 612 is formed at an end of the filter element 61 away from the fixing frame 62. The solid-liquid separation device 60 further includes a fixing plate 64. The filter element 61 is connected to the fixing plate 64 through the second connecting portion 612. The fixing plate and the kettle body 10 are fixed to each other. Through the above arrangement, it is possible to prevent the filter element 61 from shaking under the action of the flow field inside the kettle body 10, thereby reducing the filtration effect.

Further, referring to FIG. 4, multiple snapping portions 621 are formed on the fixing frame 62, and multiple clamping members (not shown) are formed on the kettle body 10. The snapping portions 621 engage with the clamping members on the reaction kettle to fix the fixing frame 62.

Referring to FIG. 1, in the present embodiment, the stirring device 30 includes a rotating shaft 31, a first impeller 32, and a second impeller 33. The rotating shaft 31 penetrates through the guide cylinder 20, and the first impeller 32 and the second impeller 33 are sequentially arranged on the rotating shaft 31 from top to bottom. In the height direction of the kettle body 10, the first impeller 32 is located inside the guide cylinder 20 and is lower than a lower edge of the second flow guide port 22, and a height of the second impeller 33 in the kettle body 10 is lower than a height of the first flow guide port 21. That is, the second impeller 33 is located outside the guide cylinder 20.

Through the above arrangement, the first impeller 32 can drive the slurry to move downward inside the guide cylinder 20, and the second impeller 33 can drive the slurry to move toward the periphery of the kettle body 10 at the bottom of the kettle body 10.

Further, the feeding pipe 40 includes a first feeding pipe 41 and a second feeding pipe 42. A pipe opening of the first feeding pipe 41 corresponds to the first impeller 32 in position and is lower than the height of the first impeller 32 in the synthesis kettle. A pipe opening of the second feeding pipe 42 corresponds to the second impeller 33 in position and is higher than the height of the second impeller 33 in the synthesis kettle.

Through the limitation of the positions of the feeding pipe and the impeller, the impeller can better mix the raw materials and avoid the agglomeration of the raw materials.

Further, in the present embodiment, the height of the lower end of the baffle 50 in the kettle body 10 is lower than the height of the second impeller 33 in the kettle body 10, so as to better guide the slurry.

In the present embodiment, the first impeller 32 can be a four-pitched-blade impeller, and the second impeller 33 can be a six-bladed disk turbine impeller.

In a direction perpendicular to an axis of the rotating shaft 31, a distance from a pipe opening of the first feeding pipe to an edge of the first impeller 32, and a distance from a pipe opening of the second feeding pipe to an edge of the second impeller 33 are both D/120 to D/12, where D is a diameter of the synthesis kettle.

Further, the first feeding pipe and the second feeding pipe can be fixed to an inner side wall of the guide cylinder 20 through connecting rods to prevent both from shaking.

In summary, in the present invention, through the arrangement of the guide cylinder 20, the stirring device 30, the baffle 50, and the solid-liquid separation device 60, it is possible to improve production efficiency and simultaneously improve product quality. Further, through the limitation of the positions of each structure, the flow field can be better optimized, thereby improving reaction speed and product quality.

The above descriptions are merely preferred embodiments of the present invention and are not intended to impose any form of limitation on the present invention. Although the present invention has been disclosed as above through the preferred embodiment, it is not intended to limit the present invention. Any person skilled in the art can make some modifications or equivalent changes to the disclosed technical content without departing from the scope of the technical solution of the present invention. Any simple modification, equivalent change, or modification made to the above embodiments based on the technical essence of the present invention shall still fall within the scope of the technical solution of the present invention.

### INDUSTRIAL PRACTICALITY

In the present invention, through the arrangement of the guide cylinder, the stirring device, the baffle, and the solid-liquid separation device, it is possible to improve production efficiency and simultaneously improve product quality. Through the limitation of the positions of each structure, the flow field can be better optimized, thereby improving reaction speed and product quality. The structure is easy to manufacture and has good industrial applicability.

## Claims

1. A high-efficiency reaction kettle, **characterized by** comprising:
a kettle body, configured to accommodate a slurry;
a guide cylinder, fixed at a top of the kettle body and extending downward, wherein a first flow guide port is formed at a bottom of the guide cylinder, and a second flow guide port is formed at an upper side wall of the guide cylinder;
multiple feeding pipes, wherein at least part of openings of the feeding pipes are arranged inside the guide cylinder;
a stirring device, penetrating through the guide cylinder and extending out from the first flow guide port of the guide cylinder, to drive the slurry to move downward inside the guide cylinder, and to drive the slurry to move toward a periphery of the kettle body at the bottom of the kettle body;
a baffle, arranged on an inner side wall of the kettle body and extending along a height direction of the kettle body; and
a solid-liquid separation device, arranged at a top of the kettle body and located outside the guide cylinder, to extract a clear liquid from the slurry inside the kettle body.

2. The high-efficiency reaction kettle according to claim 1, wherein a blocking portion is formed on the guide cylinder at a position where the second flow guide port is not provided; at a same height of the kettle body, the baffle corresponds to the second flow guide port in position, and the solid-liquid separation device corresponds to the blocking portion in position.

3. The high-efficiency reaction kettle according to claim 2, wherein multiple second flow guide ports and multiple blocking portions are provided, and the second flow guide ports and the blocking portions are arranged at intervals; multiple baffles are provided, and the multiple baffles are sequentially arranged on the inner side wall of the kettle body along a circumferential direction of the kettle body; each baffle corresponds to one second flow guide port in position; and the solid-liquid separation device is arranged between two baffles.

4. The high-efficiency reaction kettle according to claim 3, wherein the solid-liquid separation device is provided with multiple filter elements; on the solid-liquid separation device, a distance between a filter element farthest from an axis of the kettle body and the axis of the kettle body is greater than a distance between a side edge of the baffle away from a side wall of the kettle body and the axis of the kettle body.

5. The high-efficiency reaction kettle according to claim 3 or 4, wherein a height of an upper end of the baffle in the kettle body is higher than a height of a lower edge of the second flow guide port in the kettle body, and is higher than a height of a lower end of the filter element in the kettle body.

6. The high-efficiency reaction kettle according to any one of claims 1 to 5, wherein the stirring device comprises a rotating shaft, a first impeller, and a second impeller; the rotating shaft penetrates through the guide cylinder; the first impeller and the second impeller are sequentially arranged on the rotating shaft from top to bottom; in a height direction of the kettle body, the first impeller is located inside the guide cylinder and is lower than a lower edge of the second flow guide port, and a height of the second impeller in the kettle body is lower than a height of the first flow guide port.

7. The high-efficiency reaction kettle according to claim 6, wherein the feeding pipe comprises a first feeding pipe and a second feeding pipe; a pipe opening of the first feeding pipe corresponds to the first impeller in position and is lower than a height of the first impeller in a synthesis kettle; and a pipe opening of the second feeding pipe corresponds to the second impeller in position and is higher than a height of the second impeller in the synthesis kettle.

8. The high-efficiency reaction kettle according to claim 6 or 7, wherein a height of a lower end of the baffle in the kettle body is lower than the height of the second impeller in the kettle body.

9. The high-efficiency reaction kettle according to any one of claims 6 to 8, wherein the first impeller is a four-pitched-blade impeller, and the second impeller is a six-bladed disk turbine impeller.

10. The high-efficiency reaction kettle according to any one of claims 1 to 9, wherein the solid-liquid separation device comprises a filter element, a fixing frame, and a connecting pipe; the solid-liquid separation device is fixed to the kettle body through the fixing frame; one end of the connecting pipe is connected to the filter element; and the other end of the connecting pipe extends out of the kettle body.
